**Europäisches Patentamt**

**European Patent Office**

**Office européen des brevets**

(19)

(11) Veröffentlichungsnummer : **0 489 891 B1**

(12) # EUROPÄISCHE PATENTSCHRIFT

(45) Veröffentlichungstag der Patentschrift :
**07.09.94 Patentblatt 94/36**

(51) Int. Cl.$^5$ : **F16L 58/10,** F16L 55/162,
B05D 7/22, C09K 3/12

(21) Anmeldenummer : **91912245.7**

(22) Anmeldetag : **27.06.91**

(86) Internationale Anmeldenummer :
**PCT/EP91/01210**

(87) Internationale Veröffentlichungsnummer :
**WO 92/01191 23.01.92 Gazette 92/03**

(54) **VERFAHREN ZUM ABDICHTEN UND INNENAUSBESSERN VON SYSTEMEN VERLEGTER LEITUNGEN.**

(30) Priorität : **03.07.90 CH 2206/90**
**03.10.90 CH 3188/90**

(43) Veröffentlichungstag der Anmeldung :
**17.06.92 Patentblatt 92/25**

(45) Bekanntmachung des Hinweises auf die
Patenterteilung :
**07.09.94 Patentblatt 94/36**

(84) Benannte Vertragsstaaten :
**AT BE CH DE DK ES FR GB GR IT LI LU NL SE**

(56) Entgegenhaltungen :
**EP-A- 0 299 134**
**EP-A- 0 386 428**

(56) Entgegenhaltungen :
**DE-A- 3 119 360**
**DE-A- 3 138 229**
**DE-A- 3 531 449**
**US-A- 4 432 798**

(73) Patentinhaber : **Näf, Werner**
**Weingartenstrasse 2**
**CH-8820 Wädenswil (CH)**

(72) Erfinder : **Näf, Werner**
**Weingartenstrasse 2**
**CH-8820 Wädenswil (CH)**

(74) Vertreter : **Maspoli, René A. et al**
**PATENTANWALTSBUREAU R.A. MASPOLI,**
**Postfach 191,**
**Witikonerstrasse 315**
**CH-8053 Zürich (CH)**

EP 0 489 891 B1

EP 0 489 891 B1

## Beschreibung

Die vorliegend beschriebene Erfindung bezieht sich auf ein Verfahren zum Abdichten und Innenausbessern von Systemen verlegter Leitungen niederer Innendurchmesser, bei dem die Abdichtung durch Verdämmen der Lecks mittels eines Einbring-Abdichtungsmittels und die Innenausbesserung durch Abrasiv-Ausblasen und Neubeschichten der Leitung mit Harzmaterial erfolgt. Solche Leitungen sind z.B. Zu- und Ablaufleitungen für Wasser oder Gas in Wohn-, Industrie- und Kommunalanlagen bis zu einem $\emptyset_i$ von etwa 200 mm; darin eingeschlossen sind Haushalts- und Industrieabwasserleitungen bis zur Sammelleitung.

Das Problem der Beschädigung und Verkrustung solcher Leitungen ist seit langem bekannt. Derartige Beschädigungen sind u.a. auf Korrosion, Bewegungen und Vibration des Erdreiches um die Leitungen zurückzuführen; die Verkrustungen beruhen vor allem auf Kalkablagerungen aus dem Wasser, auf Rostbildung in der Leitung, auf anderen Abscheidungen aus dem Wasser, auf Reaktionsprodukten zwischen im Wasser mitgeführten Substanzen und dem Leitungsmetall usw. Auch Kombinationen der genannten Effekte sind bekannt.

Speziell störend wirken sich solche Beschädigungen, bzw. Verkrustungen bei eingemauerten oder im Boden verlegten Leitungen aus; diese Art der Leitungsverlegung ist zudem heutzutage die gebräuchlichere.

Abdicht- und Verdämmungstechniken für verlegte Leitungen sind auch aus der Patentliteratur bekannt:

Das Innenausbesserungsverfahren gemäss der EP-A 0 299 134 wird nur an einzelnen Leitungsstrecken ausgeführt. Es ist durch spezielle Verfahrensparameter und Kennwerte der verwendeten Abrasivstoffe und Harzzusammensetzungen charakterisiert; das darin gelehrte Verfahren umfasst die Verdämmung nicht. Hinweise auf Anwendung des Verfahrens auf Systemabschnitte fehlen.

In der EP-A 0 353 086 wird ein Verfahren zur Innenbeschichtung eines verzweigten Leitungssystems beschrieben. Dabei wird vorerst die Hauptleitung von einem Ende aus mit dem Beschichtungsmaterial beschichtet. Darauf werden die verschiedenen Zweigleitungen ebenso behandelt. Der Zeitpunkt des Abschlusses der Innenbeschichtung der einzelnen Zweigleitungen im Leitungssystem wird mittels einer der drei folgenden Methoden bestimmt:
- Schätzung der Beschichtungszeit aufgrund vorangegangener Messungen,
- Feststellung des Druckabfalles in der bearbeiteten Zweigleitung oder
- Feststellung des Austrittes des in die zu bearbeitende Zweigleitung beschickten Beschichtungsmaterials aus einer andern Zweigleitung.

Eine Lehre betreffend die Verdämmung lecker Rohre und Lehren betreffend die Abrasivmittel und die Harzzusammensetzungen werden darin nicht aufgeführt.

Das erfindungsgemässe Verfahren zum Abdichten und Innenausbessern von Systemen verlegter Leitungen niederer Innendurchmesser, bei dem die Abdichtung durch Verdämmen der Lecks mittels eines Einbring-Abdichtungsmittels und die Innenausbesserung durch Abrasiv-Ausblasen und Neubeschichten der Leitung mit Harzmaterial erfolgt, umfaßt die folgenden Verfahrensschritte:

a) Festlegen eines Systemabschnittes, bestehend aus einer Gruppe von Zuführleitungen zu einem Leitungshauptstrang, welche Zuführleitungen bis zum Hauptstrang ähnliche Druckabfälle zeigen und in etwa gleicher Höhe in den Hauptstrang münden plus dem Abschnitt des Hauptstranges bis zum Eintrittsbereich einer folgenden Zuführleitungsgruppe, Oeffnen der Zuführleitungs-Enden sowie der abschnittsmässigen Enden des Hauptstranges und Anschliessen der Druckluftleitungen an die Zuführungsleitungs-Enden,

b) entweder Einführen und Verblasen eines einen trockenen feinstvermahlenen, mit Wasser quellbaren Bentonit und/oder ein hydraulisch aufschliessbares Kunststoff-Dispersionstrockenpräparat sowie Inertzusätze enthaltenden Abdichtungsmittels oder Einbringen mittels Wasser von feinverteiltem Inertmaterial des spezifischen Gewichtes $1 \pm 0,8$ g·cm$^{-3}$, dann Beschicken und Halten der Leitung mit einem Wasserdampf-Luftgemisch von $\geqq 2$ bar Ueberdruck beziehungsweise Auffüllen mit, bzw. Durchströmenlassen von Wasser in/ durch die Leitung, falls die Einbring-Abdichtung trocken geschah, und, nach Feststellung der verbesserten Dichtheit der Leitung,

c) kontinuierliches Durchblasen der Leitung zwecks Innenreinigung mit Druckluft, die mit Abrasivstoffteilchen einer Härte von > 4 nach Mohs und einer mittleren Korngrösse von < 2 mm beladen ist, sowie, abschliessend,

d) Einführen und Verblasen eines lösungsmittelfreien, einen Härter enthaltenden und mit Zellulosefasern der Länge $40 \pm 10$ mm und/oder Glasfasern der Länge $5 \pm 3$ mm beladenen Epoxidharzgemisches zwecks Innenbeschichtung der Leitung.

Hinsichtlich des erfindungsgemässen Verfahrens können auch die folgenden Angaben nützlich sein:

Die Feststellung der Lecks im Leitungsabschnitt kann mittels Bestimmung des Druckabfalls darin, mittels Kanal-Thermographie oder mittels Kanal-TV erfolgen.

Das pulverförmige, trockene Abdichtungsmittel wird in einen Leitungsansatz eingefüllt, derselbe an den Eingang des Leitungsabschnittes angeschlossen und das Mittel entweder mit Druckluft in die Leitung einge-

2

und unter Einhalten einer Druckdifferenz von > 1 bar zwischen Ein- und Austritt verblasen. Der Wasserdampf kann mittels eines Injektors in die Druckluftleitung eingespiesen und der auszubessernde Leitungsteil so lange mit dem Dampf-Luftgemisch durchströmt werden, bis der Dampf beim Leitungsende austritt.

Im Nassverfahren wird das feinverteilte Inertmittel in Wasser aufgerührt und die Mischung kontinuierlich durch die Leitung unter Einhalten eines Druckabfalls von > 0,1 bar eingepresst.

Beim Abrasiv-Ausblasen kann die durch die Leitung gepresste Luft kontinuierlich mit dem Abrasivmittel beladen werden; beim Leitungsaustritt werden das Abrasivmittel und das entfernte Belagsmaterial aus der Luft herausgefiltert.

Materialien zur Verwendung als trockenes Abdichtungsmittel bzw. als hydraulisch reagierendes Bindemittel zum Verdämmen mittels Luft sind beispielsweise:

- feinstverteilter, quellbarer Bentonit von 30 ± 20 Gew.-% und/oder
- feinstverteiltes, hydraulisch aufschliessbares, wasserunlösliches aber wasserquellbares Dispersions-Trockenpräparat auf der Basis von Polyacrylsäureestern, Styrol-Copolymerisaten oder PVAC-Copolymerisaten von 20 ± 8 Gew.-%

Dem hydraulisch reagierenden Bindemittel kann bis zu 10 Gew.-% seiner Masse feinstgemahlener Portlandzement zugemischt werden.

Nur als inerte Abdichtungsmittel dienen:

- getrocknete Leichtblähtonkügelchen von < 20 mm $\emptyset_A$ und/oder
- Polystyrolschaum-Perlen von < 6 mm $\emptyset_A$ und/oder
- Korkteilchen von ca. < 4 mm $\emptyset_A$ und/oder
- feinstverteiltes Kieselgur (Aerosil[R]) von d $\geqq$ 1 g · cm$^{-3}$

Zum Verdämmen von auszubessernden Leitungen im Wasserstrom können folgende Materialien verwendet werden:

- feinperliger Blähton oder -glas mit spezifischem Gewicht $\leqq$ 1,8 g·cm$^{-3}$,
- Kunststoffschaum- oder Korkteilchen mit spezifischem Gewicht $\geqq$ 0,2 g·cm$^{-3}$ und
- feinstverteiltes Kieselgur der Pressdichte $\sim$ 1,4 g·cm$^{-3}$.

Zum Ausführen des beschriebenen Abdichtungs- und Innen-Ausbesserungsverfahrens mittels Luft dient eine Vorrichtung, welche neben einer mobilen Luft-Kompressoranlage, einer Vorrichtung zum Beladen der Druckluft mit Abrasivstoffen, einer Anlage zum Mischen und, gegebenenfalls, zum Fördern der Harzzusammensetzungen sowie einem End-Abscheider für Sand und Harztropfen, eine Druckluftverteilvorrichtung mit Luftzuführleitung und Luftaustrittsleitungen, wobei die Leitungen u.a. Ventile und Druckmessgeräte tragen, umfasst.

Mit dieser Vorrichtung ist es - zusammen mit üblichen Anschlussstücken und Druckmessgeräten - möglich, sowohl den Druckabfall in einzelnen Leitungssträngen bei verschiedenen p und ṁ zu bestimmen wie auch die automatisierten Ausbesserungsprogramme zu fahren.

Dazu kann die genannte Vorrichtung eine programmierbare Mess-, Berechnungs- und Regulierungsanlage zur automatisierten Durchführung der Ausblase- und Harzeinbringphasen nach Festlegen der Stockwerke, nach Anbringen der Anschlüsse und nach Eingabe der notwendigen Kennwerte aufweisen.

Die entsprechende Vorrichtung zur Ausführung des Abdichtungs- und Innen-Ausbesserungsverfahrens mittels Wasserstrom umfasst, neben den üblichen Zu- und Ableitungen, Hilfsgeräten usw., eine Druckwasser-Zuführung, ein Silo zur Aufnahme und kontinuierlichen Abgabe der feinverteilten Inertmaterialien, eine Zugabe- und Mischstrecke, eine Zufuhrleitung für die Mischung mit Messgeräten zur auszubessernden Leitung, eine Austrittsleitung mit Auffangsieb oder -abscheider und eventueller Rückführleitung für das Wasser.

Es folgen nun praktische Realisierungen des erfindungsgemäßen Verfahrens in Teil-Anwendungen.

Als Teil-Anwendung 1 für das erfindungsgemässe Verfahren wird nun eine Anwendung desselben zur Reinigung einer Zufuhr-Wasserleitung in einem privaten Swimming-Pool rapportiert.

Die Vor-Inspektion der Leitung hatte keine Lecks, Undichtheiten o.ä. ergeben.

Nach Verschliessen aller Abzweigungen wurden Ein- und Ausgang dieser Leitung am Vortag geöffnet.

Am Arbeitstag selbst wurde die Leitung vorerst mit Druckluft aus einem Kompressor vorgetrocknet. Die Druckluft wurde dabei vor dem Eintritt in die Leitung in einem Feuchtigkeitsabscheider vorgetrocknet.

Die notwendige Luftmenge ergab sich (wie auch anschliessend für die Reinigung und Beschichtung) aus der folgenden Tabelle:

| NW | 25mm/1" | Rohrlänge bis 100 m | 7,5 $m^3$/min. |
| NW | 40mm/1 1/2" | dito. | 14,0 $m^3$/min. |
| NW | 50mm/2" | dito. | 17,0 $m^3$/min. |
| NW | 80mm/3" | dito. | 26,0 $m^3$/min. |
| NW | 100mm/4" | dito. | 30,0 $m^3$/min. |
| NW | 150mm/6" | dito. | 45,0 $m^3$/min. |

Im vorliegenden Fall betrug die Gesamtlänge der Leitung ca. 80 m; sie bestand hauptsächlich aus 1 1/2"- und 2"-Röhren. Die Leitung war zur Teil eingemauert und zum Teil im Freien unterbodenverlegt.

Die Vortrocknung dauerte ca. 40 Minuten. Beim Leitungsaustritt wurde ein spezieller Abscheider montiert; der austretende feine Feststoff (anscheinend vor allem Kalkabscheidungen und Rost) gelangte in einen speziellen Abscheider.

Anschliessend wurde zwischen Kompressor und Lufteintritt in die Leitung eine Zugabevorrichtung für das Abrasivmittel (trockener Normalsand von 2 bis 4 mm mit Zugabe von Abfallkorund von 1 - 2 mm Korngrösse) eingebaut. Beim Luftaustritt wurde ein Abscheider mit Zyklontrenner mit Manometer und Regulierventil installiert. Darauf wurde ca. 12 Minuten lang bei einem durchschnittlichen Ueberdruck von etwa 1,2 bar mit höchster Kompressorleistung und Abrasivmittel-Zugabe gearbeitet. Nach dem Blasen waren etwa 300 kg Sand durch die zu reinigende Leitung geblasen worden. Am Ende des Blasens zeigte die Luft beim Austritt aus dem Abscheider eine Temperatur von ~60°C.

Nach kurzzeitigem Ausblasen wurden chargenweise jeweils 5 kg Haftharz der unten folgenden Rezeptur zubereitet; das Harz wurde jeweils so zubereitet, dass es eine Viskosität von über $2 \cdot 10^4$ m Pa.s bei ca. 25°C zeigte. Als Pfropfen wurden die Chargen dann in den Lufteintrittstutzen (senkrecht) am Anfang der Leitung eingegossen. Dann wurde sofort die Druckluft angeschlossen und der Pfropfen solange verblasen, bis kein deutlicher Widerstand mehr spürbar war. Hierauf wurde ein weiterer Harzpfropfen eingeführt, usw., im ganzen fünf mal. Erst dann wurde ein Austritt von Harz aus dem Leitungsende festgestellt.

Basisrezeptur Haftharz für Beschichtung:

| Epoxidharz: | Bis-A oder Bis-A/F Typ | 47 G% |
| Härter: | aliphatisches Polyaminaddukt | 19 G% |
| Titandioxid | | 8 G% |
| Silikatfüllstoff | | 21 G% |
| Thixotropierung (Aerosil$^R$) | | 5 G% |
| Total | | 100 G% |

Anschliessend wurde noch einmal 30 min lang durchgeblasen und die Leitung am Ende der Blaszeit oben und unten verschlossen.

2 Tage danach wurde die Leitung wieder an das Netz angeschlossen und vorerst gut durchgespült.

Eine Bassinfüllung dauerte nach der Reinigung der Leitung ca. 9 Stunden und ergab klares Wasser; vor der Reinigung dauerte eine Füllung über 14 Stunden, und das Wasser war zeitweise rostrot gefärbt gewesen.

Teil-Anwendung 2

Ein total 60 m langer y-Teil einer ca. 10 cm ∅-Abwasserleitung, die von zwei EFH nach dem Zusammenschluss unter einer Strasse mit ca. 3 m Höhendifferenz und total 4 etwa 90°-Bögen verläuft, zeigte bei der Inspektion am Einmündungsort in die Sammelleitung eine Leckage (offensichtlicher Wasserverlust).

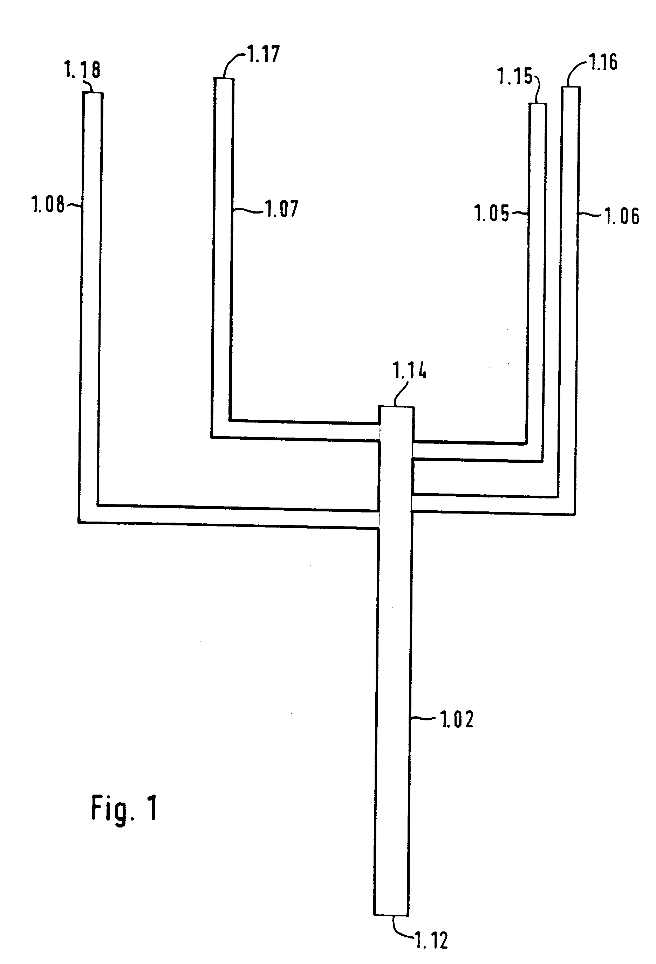

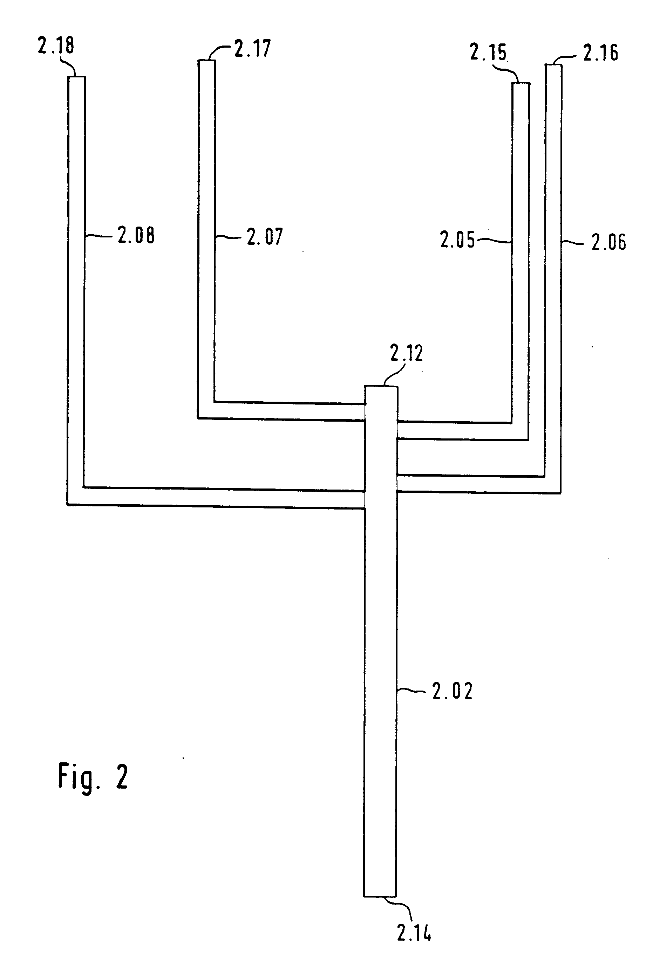

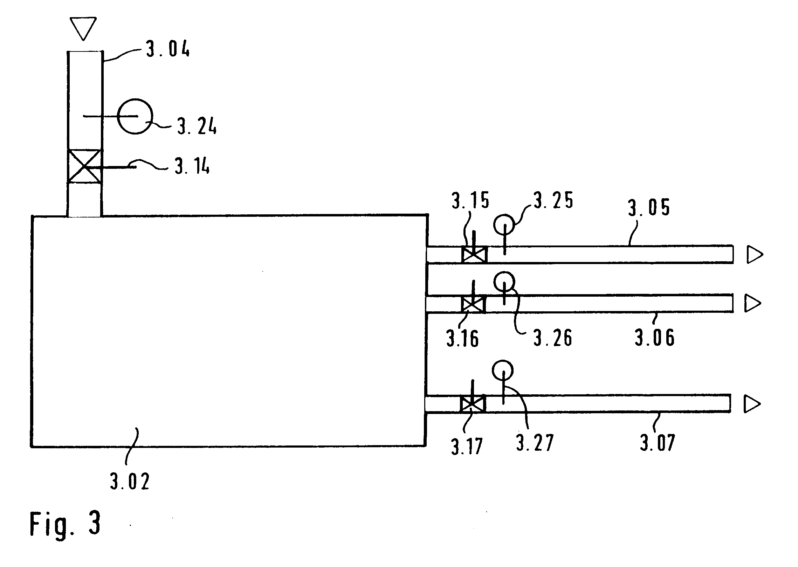

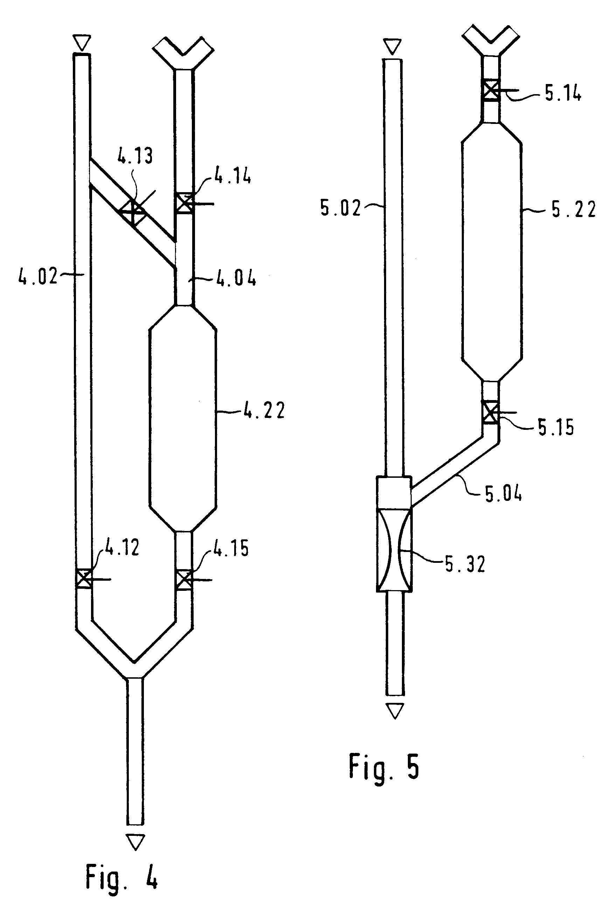

Dieser Leitungsteil wurde an den beiden Eintrittsstellen in den EFH abgedichtet und an der Austrittsstelle (d.h. am Eintritt in die Sammelleitung, welche Stelle aufgrund eines Neubaus freilag) an einen am mobilen Kompressor angeschlossenen Druckluftverteilapparat gemäss Figur 3 angeschlossen. Es konnte damit festgestellt werden, dass im Leitungteil ein Ueberdruck von ca. 0,2 bar nicht aufrecht erhalten werden konnte (Bestätigung des Lecks und zugleich Kennzeichnung desselben als gasdurchlässig).

In einen Leitungsstutzen von 1 m Länge und 10 cm Ø, welcher zwischen Leitungsende und Ausgang der Druckluftleitung beim Verteilapparat dicht eingefügt werden konnte, wurde das folgende Dichtungsmittel nach guter Durchmischung eingefüllt:

- ca. 5 1 Styropor-Perlen $\emptyset_A \sim$ 2 cm, trocken,
- ca. 1 1 Mowilith[R]-Pulver DM 200P,
- ca. 50 g PC 300Z.

Mittels Druckluft wurde das Gemisch in die zu erneuernde Leitung eingeblasen. Dabei zeigte es sich, dass durch leichtes Oeffnen der Verschlüsse bei den beiden Eintrittsstellen das Einblasen des Abdichtungsmittels leichter vor sich ging (p~1 bar Ueberdruck). Dieser Einblasvorgang wurde vier mal wiederholt.

Dann wurde der Leitungsteil von der Austrittsstelle her mit Wasser aufgefüllt und etwa 2 Std. so belassen.

Nach Ablassen des Wassers und Ausblasen der Leitung zeigte sich eine deutlich verbesserte Dichtheit der Leitung (mögl. Ueberdruck ca. 0,6 bar).

Hierauf wurden die Reinigung mittels Abrasivstrahlen mit einem Sand/Abfallkorund-Gemisch und eine Harz-Innenbeschichtung mittels der in Beispiel 1 angegebenen Harzmischung, der zugleich E-Glasstapelfasern von ca. 2 mm Länge und einem spezifischen Gewicht von 2,56 g·cm$^{-3}$ beigemischt worden war, vorgenommen.

Nach Beendigung der Harz-Innenbeschichtung des auszubessernden Leitungsteils (Harzaustritt bei beiden Eintrittsstellen), nach der Aushärtung des Harzes und nach dem Durchspülen der Leitung war praktisch kein Wasserverlust mehr nachzuweisen.

Teil-Anwendung 3

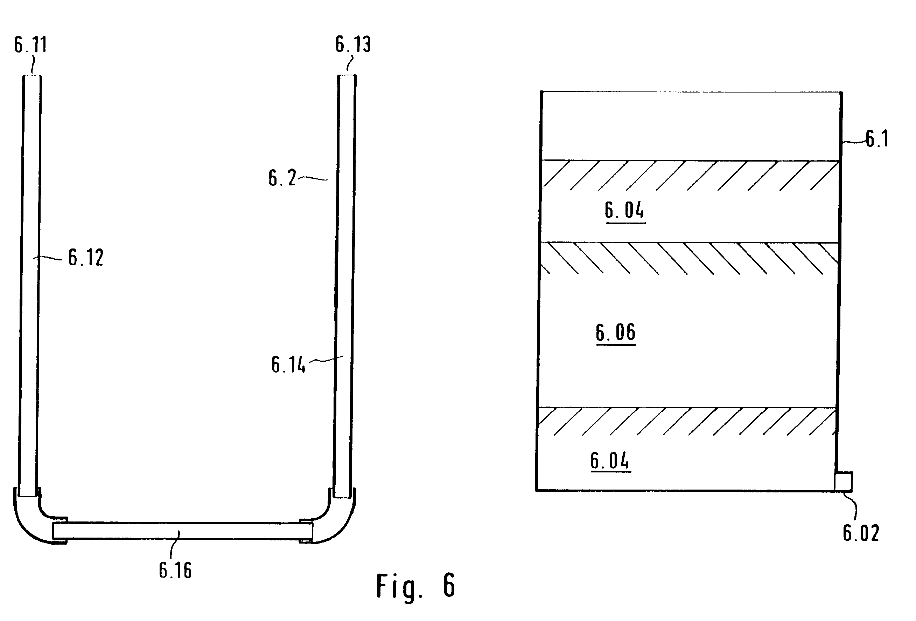

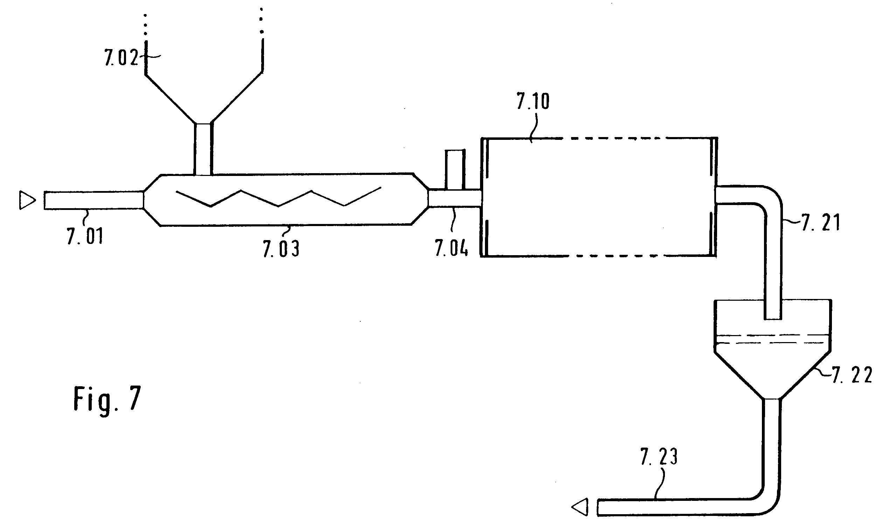

Die Erfinder/Anmelder haben eine einfache Anlage zur weiteren Vervollkommnung der erfindungsgemässen Methode, speziell der Abdichtungstechnologie, installiert (siehe Figur 6).

In den Behälter 6.1 (beispielsweise ein Fass) mit Untenauslauf 6.02 werden drei Schichten eingefüllt: 6.04 feiner Sand ($\emptyset_A$ bis 2 mm) und 6.06 Kies ($\emptyset_A$ 10 bis 20 mm).

Beim Einfüllen der Kiesschicht 6.06 wird das Proberohr 6.2 in die Schicht eingebaut, der waagrechte Teil 6.16 desselben kommt dabei ungefähr in die Mitte der Kiesschicht zu liegen. Dann wird fertig aufgefüllt.

Bei 6.11 können angeschlossen bzw. installiert werden:
- die Druckluftleitung vom Kompressor,
- das Manometer (evtl. mit Aufzeichnungsmöglichkeit),
- Gas- bzw. Dampfanschluss,
- das Füllrohr für die verschiedenen Abdichtungsmischungen und
- ein Regelventil (Kugelventil),

bei 2.03:
- ein Regelventil,
- ein Manometer und
- ein Materialfang.

Im waagrechten Teil 6.16 des Proberohrs können Bohrungen verschiedener Durchmesser angebracht werden. Dieser "waagrechte" Teil ist übrigens nicht immer waagrecht, er kann auch einen 90°-Bogen enthalten, welcher nach oben/unten oder nach links/rechts verläuft.

Mit dieser einfachen Vorrichtung können also praktisch simuliert werden:
- gasundurchlässige und gasdurchlässige Lecks (in Sand, bzw. in Kies),
- Lecks in geraden Leitungsstrecken und in Bögen,
- Verdämmung bei verschlossenen Leitungsenden oder bei konstant gehaltener Druckdifferenz.

Es hat sich nach den anfänglichen Untersuchungen gezeigt, dass als eigentliche Bindemittel Dispersionspulver wie EMU[R]-Pulver 120 FD (BASF), Mowilith[R]-Pulver DM$_R$ 200 P (Hoechst), Vinnapas[R]-Dispersionspulver (Wacker) o.ä., allein oder im Gemisch mit Portlandzement (spezielle Zemente mit hohen Aluminatgehalten), geeignet sind.

Der Aufschluss dieser Mittel geschieht nach dem Einblasen mittels Wasser, Wasserdampf und/oder mittels Gaszuführung ($NH_3$, $CO_2$).

Als Füll- bzw. Inertmittel für das Verdämmen derartiger Leckagen sind u.a. Styroporperlen, Korkteilchen, feingemahlener Bentonit, feinstverteilte Kieselsäure (Aerosil[R]) u.a. geeignet. Inwiefern die beiden letztgenannten Materialien auch die Bindemittel in deren Wirkung unterstützen, ist z.Zt. noch nicht geklärt.

Blähton kann als Füllmaterial eingesetzt werden, wenn das Leck am oder um den tiefsten Punkt der auszubessernden Leitung liegt.

Mit der gleichen Anlage kann auch das Absaugen mittels Lanzen (bei gasundurchlässigen Lecks) realisiert werden: von 6.13 her wird ein Schlauch, welcher vorn eine Verdickung aufweist, bis vor die Leckstelle eingeführt (bzw. von der Gegenseite her eingezogen). Beim Einblasen der Abdichtungsmischung wird dieselbe v.a. vor oder in der Umgebung der Absaug- (= Leck-)stelle abgelagert. Material, das sich dabei im Rohr selbst festsetzt, kann anschliessend leicht durch das Abrasiv-Ausblasen wieder entfernt werden.

## Teil-Anwendung 4

Es wurde eine vergrösserte Versuchsanlage aufgestellt:

Ein Holzrahmen von je ca. 1,8 m Breite, 5,4 m Länge und 0,9 m Höhe wurde zu etwa 0,2 m mit einem Kies-Sand-Gemisch (Korngrössen 0,5 - 8 mm) gefüllt. Auf dieses Bett wurde eine M-förmige Rohrschlange aus 1-Zoll Gasröhren gelegt. Die genannte Rohrschlange wies, wie gesagt, vier parallele Stränge auf. Um künstlich Druckabfall zu schaffen, hatten die ⎍-förmigen Verbindungsstücke zwischen den Strängen nur 1/2 Zoll $\emptyset_i$. Im dritten Strang (im Strömungssinn betrachtet) waren eine oder mehrere 1-cm-Bohrungen seitlich angebracht. Die Rohrschlange wies je eine aufsteigende Eintritts- und Austrittsleitung auf.

Nach Installation der Rohrschlange wurde mit dem gleichen Sand-Kies-Gemisch auf ca. 0,7 m Höhe aufgefüllt.

Das Nassverdämmungs-Gemisch wurde in einem 160-1 Fass angerührt. Die Erreichung einer genügenden Homogenität des Gemisches war ein Problem. Untersucht wurden v.a. flüssige Verdämmungsgemische aus 100 Gewichtsteilen Wasser, 10 Gewichtsteilen Kunststoff-Hartschaum-Teilchen von 2 - 4 mm und 1 Gewichtsteile Aerosil[R] 90 . Das Mischfass wies einen untern Auslauf mit Absperrventil auf. Nach Erreichen einer anscheinend genügenden Homogenität wurde eine mobile Kreiselpumpe zur Förderung von Suspensionen angeschlossen. Diese leistete bei einem Fördervolumen von etwa 50 l/min (~1 l/s) ein $\Delta$p von max. 2 bar Ueberdruck.

Die Verbindungsleitung von der Pumpe zur Eintrittsleitung der Versuchsanlage war mobil (Metallschlauch), wies einen Schnellanschluss (Bride) auf und war mit einem relativ genauen Manometer (Bereich 1 - 3 bar, Unterteilung 1/10 bar) versehen. Die Austrittsleitung aus der Versuchsanlage, die zu einem Ablauf mit vorgeschaltenem Filter für die Verdämmungsmittel führte, wies einen gleichen Manometer und zugleich ein Regelventil zur Regulierung der Strömungscharakteristiken auf.

Die Ausführung der Versuche gestaltete sich jeweils wie folgt:

Nach Anschluss der Kreiselpumpe regulierte der Mann beim Austritt möglichst genau auf 0,5 bar Ueberdruck und der Mann beim Eintritt notierte alle 10 sek die Druckanzeige auf seinem Manometer. Es wurde festgestellt, dass immer, wenn Verdämmung oder zumindest teilweiser Verschluss der Bohrung eintrat, die Druckanzeige beim Manometer 1 (der Mann beim Manometer 2 schaute, wie gesagt, auf einen möglichst konstanten Austritts-Ueberdruck von 0,5 bar und auch von Auge auf ein möglichst konstantes Fördervolumen), um etwa 0,1 bis 0,2 bar höher wurde.

Als Verdämmung wurde bei der äusserlichen Kontrolle der nach dem Versuch freigelegten Rohrschlange ein Zustand bezeichnet, der gemäss Ansicht der Fachleute bei einer anschliessenden Innenbeaufschlagung des Rohres mit Haftharz zu einer echten Abdichtung desselben geführt hätte.

In diesem Sinne ergaben "nasse Abdichtungsgemische" aus ~100 Gewichtsteilen Wasser, ~8 bis 18 Gewichtsteilen Hart-EP-Schaumstoffteilchen von 2 - 4 mm Korngrösse und einer Rohdichte von $\leq$ 400 kg/m$^3$ sowie 0,1 - 1 Gewichtsteilen Aerosil[R] 90 die überzeugendsten Resultate, und der Druckanstieg beim Manometer 1 (bei konstanten p und $\dot{v}$ beim Austritt) war am eindeutigsten.

## Patentansprüche

1.  Verfahren zum Abdichten und Innenausbessern von Systemen verlegter Leitungen niederer Innendurchmesser, bei dem die Abdichtung durch Verdämmen der Lecks mittels eines Einbring-Abdichtungsmittels und die Innenausbesserung durch Abrasiv-Ausblasen und Neubeschichten der Leitung mit Harzmaterial erfolgt, umfassend die folgenden Verfahrensschritte:

    a) Festlegen eines SysPemabschnittes, bestehend aus einer Gruppe von Zuführleitungen zu einem Leitungshauptstrang, welche Zuführleitungen bis zum Hauptstrang ähnliche Druckabfälle zeigen und in etwa gleicher Höhe in den Hauptstrang münden plus dem Abschnitt des Hauptstranges bis zum Eintrittsbereich einer folgenden Zuführleitungsgruppe, Oeffnen der Zuführleitungs-Enden sowie der abschnittsmässigen Enden des Hauptstranges und Anschliessen von Druckluftleitungen an die Zuführungsleitungs-Enden,

b) entweder Einführen und Verblasen eines einen trockenen feinstvermahlenen, mit Wasser quellbaren Bentonit und/oder ein hydraulisch aufschliessbares Kunststoff-Dispersionstrockenpräparat sowie Inertzusätze enthaltenden Abdichtungsmittels oder Einbringen mittels Wasser von feinverteiltem Inertmaterial des spezifischen Gewichtes $1 \pm 0,8$ g·cm$^{-3}$, dann Beschicken und Halten der Leitung mit einem Wasserdampf-Luftgemisch von $\geqq$ 2 bar Ueberdruck beziehungsweise Auffüllen mit, bzw. Durchströmenlassen von Wasser in/ durch die Leitung, falls die Einbring-Abdichtung trocken geschah, und, nach Feststellung der verbesserten Dichtheit der Leitung,

c) kontinuierliches Durchblasen der Leitung zwecks Innenreinigung mit Druckluft, die mit Abrasivstoffteilchen einer Härte von > 4 nach Mohs und einer mittleren Korngrösse von < 2 mm beladen ist, sowie, abschliessend,

d) Einführen und Verblasen eines lösungsmittelfreien, einen Härter enthaltenden und mit Zellulosefasern der Länge $40 \pm 10$ mm und/oder Glasfasern der Länge $5 \pm 3$ mm beladenen Epoxidharzgemisches zwecks Innenbeschichtung der Leitung.

## Claims

1. Process for sealing and internal repair for systems of laid pipes with a small inside diameter, in which the sealing is achieved by stopping the leaks by means of an introduced sealant and the internal repair is achieved by blowing an abrasive through the pipe and re-lining it with resin material, comprising the following process steps:

a) localising a system comprising a group of supply pipes to a main pipe set, said supply pipes demonstrating similar drops in pressure as far as the main pipe set and feeding into the main pipe set at approximately the same level, and the section of the main pipe set as far as the entry area of a following group of supply pipes; opening the ends of the supply pipes and the section ends of the main pipe set and connecting compressed air pipes to the ends of the supply pipes;

b) either inserting and blowing through a sealant containing a dry, very finely ground bentonite, which may be swelled in water, and/or a plastics dispersion dry preparation, which may be hydraulically broken down, and inert additives, or introducing in water finely dispersed inert material with the specific gravity $1 \pm 0.8$ g · cm$^{-3}$, then charging and holding the pipe with a mixture of steam and air with an excess pressure of $\geqq$ 2 bar, or filling the pipe with water or allowing water to flow through it, if the sealant introduction was carried out dry and, after an improvement in the tightness of the pipe has been established;

c) continuously blowing compressed air, which is laden with abrasive particles with a hardness of > 4 on the Moh's scale of hardness and an average granulation of < 2 mm, through the pipe to clean its inside, and finally

d) introducing and blowing in a solvent-free epoxy resin mixture containing a hardener and laden with cellulose fibres $40 \pm 10$ mm in length and/or glass fibres $5 \pm 3$ mm in length for the purpose of lining the interior of the pipe.

## Revendications

1. Procédé pour l'étanchéification et la réparation interne de systèmes de conduites posées de faible diamètre interne, dans lequel l'étanchéification est réalisée par colmatage de la fuite au moyen d'un agent d'étanchéification d'apport et la réparation interne est réalisée par soufflage abrasif et nouveau revêtement de la conduite avec un matériau résinique, comportant les étapes de procédé suivantes :

a) détermination d'un segment de système consistant en un groupe de conduites d'amenée à une section principale de conduite, lesquelles conduites d'amenée comportent jusqu'à la section principale des pertes de charge analogues et débouchent dans la section principale sensiblement à la même hauteur plus le segment de la section principale jusqu'au domaine d'entrée d'un groupe de conduites d'amenée suivant, ouverture des extrémités des conduites d'amenée et des extrémités de la section principale correspondant au segment et raccordement de conduites d'air comprimé aux extrémités des conduites d'amenée,

b) introduction et soufflage d'un agent d'étanchéification contenant une bentonite sèche très finement broyée, gonflable à l'eau et/ou une préparation sèche à dispersion de matières plastiques qui peut être dissoute hydrauliquement ainsi que des additifs inertes ou introduction avec de l'eau d'un matériau inerte finement divisé de masse spécifique $1 \pm 0,8$g$\cdot$cm$^{-3}$, puis exposition et maintien de la conduite à un mélange vapeur d'eau-air d'une surpression supérieure ou égale à 2 bars ou remplissage avec, ou passage d'eau dans/à travers la conduite, lorsque l'étanchéification d'apport s'est produite à sec, et, après mise en évidence de l'étanchéité améliorée de la conduite,

c) soufflage continu de la conduite à des fins de nettoyage interne avec de l'air comprimé qui est chargé de particules abrasives d'une dureté supérieure à 4 selon Mohs et d'une granulométrie moyenne inférieure à 2 mm, et enfin

d) introduction et soufflage d'un mélange de résines époxydes exempt de solvant, contenant un durcisseur et chargé de fibres cellulosiques d'une longueur de $40 \pm 10$ mm et/ou de fibres de verre d'une longueur de $5 \pm 3$ mm à des fins de revêtement interne de la conduite.

Fig. 1

Fig. 2

Fig. 3

Fig. 4

Fig. 5

Fig. 6

EP 0 489 891 B1

Fig. 7

EP 0 489 891 B1